# EUROPÄISCHE PATENTSCHRIFT

(11) **EP 1 630 537 B1**
(45) Veröffentlichungstag und Bekanntmachung des Hinweises auf die Patenterteilung: **24.11.2010**
(21) Anmeldenummer: 05018339.1
(22) Anmeldetag: 24.08.2005
(51) Int. Cl.: G01M 5/00, G01M 7/00

(54) **Vorrichtung und Verfahren zum Prüfen der Stabilität eines Mastes**
Apparatus for and method of testing the stability of a pole
Dispositif et procédé d'essai de stabilité d'un poteau

(30) Priorität: 25.08.2004 DE 102004041061
(43) Veröffentlichungstag der Anmeldung: 01.03.2006
(73) Patentinhaber: Reiners, Christa, 41812 Erkelenz (DE)
(72) Erfinder: Reiners, Christa, 41812 Erkelenz (DE)
(74) Vertreter: Thomas, Stephan

(56) Entgegenhaltungen:
- DE-A1- 10 300 947
- US-A- 6 026 687

## Beschreibung

Die Erfindung betrifft Verfahren zum Prüfen der Stabilität eines im Boden stehend freistehend verankerten Mastes durch Erregung desselben zu mechanischen Eigenschwingungen, welche mit Hilfe eines als Unwucht am Mast drehbar gelagerten Gewichts mit motorischem Antrieb in den Mast eingeleitet werden, wobei die Amplitude der so erregten Schwingung registriert wird. Sie betrifft ferner eine Vorrichtung zum Durchführen des Verfahrens.

Der Mast kann als natürliches Gebilde, zum Beispiel als Baum, oder als künstliches Gebilde, zum Beispiel als Lampenmast, ausgebildet sein. Die noch vorhandene Stabilität beschreibt auch den Alterungsprozeß des Mastes. Durch die mechanische Schwingungserregung des Mastes können - ebenso wie als Folge von in der Natur einwirkenden Windböen - sowohl Eigenschwingungen des gesamten Mastes als auch seiner Teile, Aufbauten oder Anbauten bzw. des Astwerks oder einzelner Äste angeregt werden.

Im Rahmen der Erfindung wird unter dem Begriff "Boden" ein Fundament irgendeiner Art, zum Beispiel in einem Straßen- oder Bürgersteigpflaster, im Acker, im Wald oder auf bzw. an einem Gebäude, verstanden. Mit "verankert" wird die jeweils erstrebte Fixierung bzw. Fundamentierung oder Verwurzelung des Mastes im Boden gemeint. Der Begriff "Lampenmast" umfaßt Laternenmasten, Ampelmasten und -brücken oder Träger von Verkehrs- oder Werbeschildern bzw. Werbeanlagen. Derartige Masten besitzen oft weit vorkragende Ausleger, die die Aufbauten (Ampeln, Schilder usw.) tragen. Ein zu kontrollierender künstlicher Mast kann teilweise oder ganz aus Metall, aus Kunststoff, Holz, Beton oder dergleichen aus dem Sachgebiet einschlägiger Materialien bestehen. Ein definitionsgemäß unter den Begriff Mast fallender natürlich wachsender Baum besitzt in der Regel ein umfangreiches Ast- und Zweigwerk, das, zum Beispiel alterungs- oder krankheitsbedingt, geschwächt oder morsch sein kann.

Ein Verfahren zum Prüfen der Stand- und Biegefestigkeit - Stabilität - von im Boden verankerten Lampenmasten wird in EP 06 38 794 B1 beschrieben. Bei dem bekannten Verfahren wird der jeweils zu prüfende Mast einem variablen Biegemoment ausgesetzt, indem er von einer oberhalb seiner Verankerung eingeleiteten und im Verlauf des Prüfvorgangs steigenden Kraft belastet wird. Zur Bestimmung der Stabilität des Mastes werden zugleich sowohl die genannte Kraft als auch die Strecke, um die der Mast aufgrund des Biegemoments seitlich ausgelenkt wird, mit sensoren gemessen.

Eine andere Mast-Belastungsprüfung wird in DE 100 08 201 A1 offenbart. Hierbei wird der mit dem Biegemoment belastete Mast durch plötzliches Wegnehmen einer einwirkenden Kraft in Eigenschwingung versetzt. Aus der Amplitude und der Dämpfung der Eigenschwingung lassen sich kennzeichnende Rückschlüsse auf die Stabilität des jeweiligen Mastes oder seiner Teile ziehen. Die Eigenfrequenz des Mastes kann sich durch Korrosion des Mastes verändern. Aus einer Abweichung der Eigenfrequenz vom Ursprungs- oder Normalwert - z.B. im Vergleich zu anderen Masten der gleichen Art - kann daher auf den Erhaltungszustand des Mastes geschlossen werden.

Durch die Erregung des Mastes und seiner Teile zu Eigenschwingungen sollen die natürlichen Verhältnisse bei Belastung des Mastes in Wind oder Sturm simuliert werden. Eine Windböe versetzt den jeweiligen Mast aber nicht nur in eine lineare Schwingung sondern in der Regel zugleich in eine Drehschwingung. Auf den Mast und seine Teile wirken dann zugleich Linear- und Torsionskräfte. Mit Hilfe des einseitig am Mast fixierten Gewichts nach der vorgenannten DE 100 08 201 A1 lassen sich Drehschwingungen des Mastes deutlich simulieren bzw. verstärken, auch wenn der Mast nur in eine Richtung ausgelenkt und (ursprünglich) nur in diese Richtung in Schwingungen versetzt wird. Hierzu wird im Bekannten vorgeschlagen, das Gewicht in einer Ebene seitlich des Mastes zu fixieren, die ungefähr senkrecht zur Richtung der anfänglichen erzwungenen Mastschwingung steht.

Das beschriebene einseitig am Mast fixierte Gewicht entspricht in seiner Wirkung qualitativ derjenigen des Lampenauslegers bei einem Peitschenmast, des seitlichen Trägers von Schildern oder Ampeln oder derjenigen eines seitlich an einem Baumstamm sitzenden Astes. Ein in der vorbeschriebenen Weise und/oder durch das Gewicht nach DE 100 08 201 A1 unsymmetrisch ausgebildeter Mast wird durch elastische Auslenkung in einer Richtung nach Loslassen der auslenkenden Kraft in eine Schwingung versetzt, die fast augenblicklich in eine dominante Eigenschwingung übergeht. Es kommen auch Fälle vor, in denen mehrere annähernd gleichstarke Eigenschwingungen miteinander konkurrieren und entsprechende Schwebungen auftreten. Die Frequenzen dieser Eigenschwingungen lassen sich durch entsprechende Meßgeräte ermitteln. Es ist aber auf die herkömmliche Weise nur schwer möglich, die diversen Eigenschwingungen des Mastes und seiner Teile, zum Beispiel von Verbindungsstellen am Mast oder zwischen Mast und Ausleger, von angebauten Lampen, Ampeln oder Schildern und deren Teilen getrennt zu erfassen.

In US 6026687 A wird ein Verfahren zum Bestimmen einer Resonanzfrequenz einer aus Metall bestehenden Schiene beschrieben. Die Resonanzfrequenz wird dadurch gemessen, dass man eine Schwingung konstanter Amplitude und stetig veränderter Frequenz in die Schiene einleitet. Zum Lösen von in der Schiene vorhandenen Restspannungen wird die Schiene - für eine gewisse Zeitdauer - mit Schwingungen einer Frequenz ober- oder unterhalb der gemessenen Resonanzfrequenz behandelt. Im Bekannten wird aber nicht angestrebt, herauszufinden, wo - an welchen Stellen in der Schiene - die Restspannungen vorhanden sind oder waren.

Schließlich ist aus DE 103 00 947 A1 ein Mastprüfverfahren bekannt, bei dem der Mast mit einer periodischen Kraft in Schwingung versetzt und die Reaktion mit einem oder mehreren Beschleunigungssensoren gemessen wird. Im Bekannten wird der Prüfvorgang durch Messen der Mast-Eigenfrequenz, die durch Wind angeregt werden könnte, eingeleitet. Anschließend wird der Mast mit dieser Eigenfrequenz mit den erwarteten Windlasten entsprechend unterschiedlichen Amplituden in Schwingung versetzt. Masten können jedoch nicht nur insgesamt sondern auch in ihren Teilen und in den am Mast befestigten Gegenständen Schäden haben. Den diversen Teilen entsprechen zahllose verschiedene Eigenfrequenzen, die im Bekannten nicht geprüft werden.

Der Erfindung liegt die Aufgabe zugrunde, ein Verfahren zu schaffen, mit dem es möglich ist, Schwingungen mit - kontinuierlich oder stufenweise - pro Zeiteinheit definiert ansteigender Frequenz in einen Mast einzuleiten. Zugleich besteht die der Erfindung zugrunde liegende Aufgabe darin, eine Vorrichtung zum Durchführen des Verfahrens einfach montierbar und - auch betreffend die Messung - handhabbar so auszubilden, daß der Energieaufwand zum Betrieb der mechanischen Mastbelastung minimal wird. Die Vorrichtung soll, vorzugsweise ohne elektrischen Netzanschluß, zum Beispiel mit einem Kleinmotor im 12 bis 24-Volt DC-Bereich, betreibbar sein und auf den Mast relativ zu dessen Masse nur geringe statische Kräfte ausüben, so daß die Stabilität des Mastes durch die Messung nicht merklich beeinträchtigt wird.

Die erfindungsgemäße Lösung wird im Patentanspruch 1 angegeben. Sie besteht die für das Verfahren zum Prüfen der Stabilität des Mastes mit Hilfe eines am Mast drehbar als Unwucht gelagerten Gewichts mit motorischem Antrieb darin, dass die in den Mast eingeleiteten Schwingungsfrequenzen durch Verändern der Unwucht und/oder der Drehzahl des Gewichts zeitlich verändert werden und dass beim Registrieren der Amplitude der so erregten Schwingungen die Frequenzen oder Frequenzbereiche der Eigenschwingungen des ganzen Mastsystems - als Wirkung von Linear- und/oder Torsionskräften - auch von Einzelteilen oder Verbindungsstellen des Mastes, aber auch des Mastes insgesamt, getrennt voneinander und nacheinander registriert werden. Einige Verbesserungen und weitere Ausgestaltungen der Erfindung werden in den übrigen Ansprüchen beschrieben.

Erfindungsgemäß wird das auf einem am Mast fixierten Träger schwenkbar gelagerte Gewicht mit Hilfe des Antriebs mit bewußt veränderter, zum Beispiel in größenordnungsmäßig zehn Minuten lang mit von 0 bis 200 Hz variierter bzw. durchlaufender (steigender oder fallender), Umdrehungszahl angetrieben. Wenn die Umdrehung (z.B. automatisch) von 0 bis 200 Hz ansteigt, ergeben sich eine entsprechend automatische Unwuchtkrafterhöhung und zugleich ein automatisches Aufspüren aller im Frequenzbereich vorkommenden Resonanzen des Mastsystems. Der Frequenzbereich 0-200 Hz ist lediglich beispielhaft angegeben. Die Erfindung wird durch die Grenzen nicht berührt.

Die Lagerung des (rotierenden) Gewichts außerhalb seines Schwerpunkts und damit die bewußte Unwucht haben zur Folge, daß das Gewicht bei seiner Rotation eine Schwingkraft mit einer durch die momentane Umdrehungszahl bestimmten Grundfrequenz auf die Achse sowie den Träger und damit auf den Mast und dessen Teile ausübt. Dadurch leitet das rotierende Gewicht eine Schwingung mit erzwungener Frequenz in den Mast und damit in das gesamte Mastsystem ein. Wenn diese sich mit der Zeit ändernde, z.B. ansteigende, erzwungene Frequenz den Wert der Eigenfrequenz eines der Teile des Mastsystems (oder einer Oberwelle der Eigenfrequenz) erreicht, stellt sich eine Resonanz nach der anderen ein, die vom Meßgerät erfaßt werden soll. Oft kann man sogar hören oder sehen (ohne Meßgerät), wie ein Teil des Mastsystems nach dem anderen in Resonanz (mit der eingeleiteten Schwingung veränderter Frequenz) kommt und durch Anschauung sofort entscheiden, ob dieses oder dieses Teil des Mastsystems in Ordnung ist oder nicht.

Die Anwendung der Erfindung liefert damit eine ideale Simulation der Wirkung von natürlichem Wind und Wetter und zwar nicht nur für den Mast insgesamt sondern auch - zugteich - für alle Mastteile und daran befestigte Gegenstände. Bei ein und derselben Prüfung genügt dazu in der Regel eine Schwingungsanregung mit konstanter Amplitude. Wie unten erläutert wird, kann es aber im Rahmen der Erfindung auch günstig sein, in bestimmten Phasenbereichen des Umlaufs des Gewichts die Amplitude (d.h. die eingeleitete Kraft) der erzwungenen Schwingung stoßweite zu erhöhen oder zu erniedrigen.

Das erfindungsgemäß mit variabler, z.B. von Null bis zu einem Maximum ansteigender Frequenz, um eine Achse rotierende Gewicht leitet eine Schwingung in den Mast ein, deren Frequenz direkt von der Antriebsdrehzahl (Motordrehzahl) abhängt, also in jedem Moment bekannt bzw. meß- oder anzeigbar ist. Überraschenderweise genügen hierbei als Unwucht zur meßbaren Erregung des Mastes und seiner Teile Gewichte, deren Masse klein gegenüber derjenigen des Mastes ist. In der Regel reichen - zum Prüfen von Masten bis größenordnungsmäßig 20 m Bauhöhe - rotierende Gewichte mit einer Masse von größenordnungsmäßig 5 kg aus, die mit einem 6-V DC-Motor, z.B. batteriegetrieben, mit der ansteigenden (oder abfallenden) Umdrehungszahl anzutreiben sind.

Mit Hilfe im Handel erhältlicher Meßgeräte lassen sich Eigenschwingungs-Reaktionen des Mastes und aller zugehörigen Teile mit so hoher Auflösung ermitteln, daß die vorgenannten kleinen Erreger-Massen für die Aufzeichnung aller relevanten Eigenfrequenzen eines Mastsystems ausreichen. In der zeitlichen Aufzeichnung der so registrierten Mastschwingungen, vorzugsweise wird eine räumliche Registrierung und Aufzeichnung der Meßergebnisse vorgesehen, erscheinen an verschiedenen Stellen des Aufzeichnungsbildes und für verschiedene Erregerfrequenzen und zu bestimmten Zeiten der Messung Maxima, welche auf Resonanzen mit Eigenschwingungen des Mastsystems hindeuten. Wie gesagt, kann man oft schon mit bloßem Auge erkennen, welches Einzelteil des Mastsystems angeregt wird und bei einer bestimmten Frequenz mitschwingt. Dabei kann man auch erkennen, ob die Stabilität, insbesondere Verankerungsstabilität, dieses Teils ausreicht oder überprüft werden muß.

Wenn die erzwungene Frequenz die Eigenfrequenz des Hauptteils des Mastes erreicht, ergibt sich oft eine relativ starke Resonanzamplitude im Schwingungsbild. Die Resonanzüberhöhung ist proportional einer Materialschwächung. Diese Resonanzaufzeichnung besitzt häufig eine Feinstruktur mit einer mehr oder weniger großen Zahl von ins Auge fallenden Spitzen. Der erfahrene Fachmann kann, insbesondere wenn er zugleich den Mast und seine Teile beim Durchfahren der verschiedenen Frequenzen genau ins Auge faßt, sagen, welche Teile des Mastsystems in Ordnung sind und welche Teile einer näheren Überprüfung unterzogen werden müssen. Beim Durchfahren der vorgesehene Frequenzen läßt sich auch überprüfen, ob eventuelle Verbindungen des Mastes mit einem Ausleger die erforderliche Stabilität haben oder ob irgendwo eine relevante Roststelle, Verschraubung, zum Beispiel auch unterirdische Flanschverschraubungen, die unter anderem bei Ampelmasten vorkommen, und dergleichen Problemzone vorhanden ist.

Gemäß weiterer Erfindung kann die Wirkung des erfindungsgemäß mit variabler Frequenz rotierenden Gewichts auch dadurch verändert werden, daß man den radialen Abstand zwischen der Drehachse und dem Schwerpunkt der Unwucht bzw. des Gewichts (und damit die Intensität der erzwungenen Schwingkraft) verändert. Im Kern beruht die Wirkung der Erfindung darauf, daß sich der Effekt der Unwucht mit der bewußt geänderten Umdrehungszahl ändert. Das erfindungsgemäß als Unwucht um eine Achse rotierende Gewicht wird vorzugsweise auf einer radialen Speiche der Achse so befestigt, daß es sich ganz auf einer Seite seiner Drehachse befindet.

Die Wirkung und Größe der Unwucht lassen sich auch dadurch verändern, daß man die Drehachse selbst - in Ruhe oder in Betrieb - schwenkt bzw. umklappt, so daß sie beispielsweise aus einer Position parallel zur Mastachse in eine Position senkrecht zur Mastachse gelangt. Das Umklappen kann um ein Gelenk erfolgen, dessen Achse senkrecht zu der Drehachse steht. Diese Gelenkachse kann jede Richtung in Bezug auf die Längsachse des Mastes zwischen deren Radiusrichtung und deren Umfangsrichtung haben. Bei dem Verschwenken der Drehachse kommen natürlich auch alle Zwischenlagen in Frage. Es liegt sogar im Rahmen der Erfindung, die Drehachse des Gewichts während der Gewichtsrotation (den Kreiselkräften zum Trotz) in die eine oder andere Richtung zu klappen.

Unabhängig von der Rotationsfrequenz kann nach einem bevorzugten Aspekt gemäß weiterer Erfindung auch die Rotationsantriebskraft des Gewichts variabel gestaltet werden. Vorzugsweise kann das Gewicht bei jeder Umdrehung am Anfang eines bestimmten Phasenbereichs vorübergehend zusätzlich beschleunigt und am Ende des Phasenbereichs wieder gebremst werden. Das wird dadurch möglich, daß man den antreibenden Motor im jeweiligen Phasenbereich für kurze Zeit mit erhöhter Spannung beaufschlagt. Beispielsweise kann die normale Drehung mit 6 V betrieben werden, während in einer örtlich relativ zum Mast oder dessen Achse (etwa durch einen mitlaufenden Nocken) bestimmten Phase des 360°-Umlaufs des Gewichts die Motorspannung für kurze Zeit erhöht, z.B. vervierfacht, und vielleicht nach 10° bis 20° des Umlaufs, wieder herabgesetzt wird. Anstelle mit dieser vorübergehend stoßweisen Erhöhung kann umgekehrt auch mit vorübergehend stoßweise verminderter Amplitude (von z.B. 24 V auf 6 V Motorspannung) gearbeitet werden.

Anhand der schematischen Zeichnung eines Ausführungsbeispiels werden Einzelheiten der Erfindung erläutert. Es zeigen
- **Fig. 1**: ein Mastsystem mit erfindungsgemaßem Schwingungs-Generator;
- **Fig. 2**: einen horizontalen Schnitt mit Draufsicht auf den Schwingungsgenerator; und
- **Fig**. **3**: eine Aufzeichnung beispielhafter Schwingungsamplituden in Abhängigkeit von Zeit- bzw. Umdrehungsfrequenz.

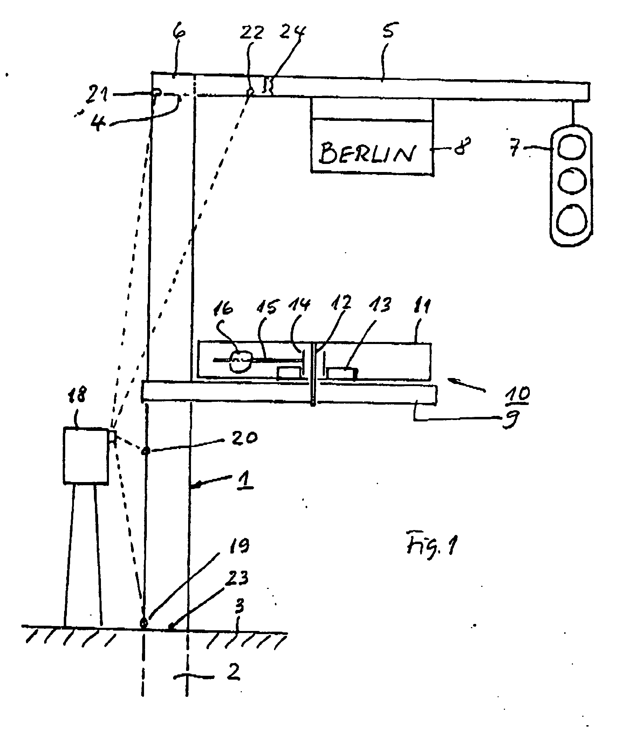

Fig. 1 zeigt einen insgesamt mit 1 bezeichneten Mast, der mit seinem unterirdischen Teil 2 im Boden 3 verankert ist. Am oberen Ende 4 des Mastes 1 ist ein Ausleger 5 an einer Verbindungsstelle 6 fixiert, der beispielsweise eine Ampel 7 und/oder ein Schild 8 trägt.

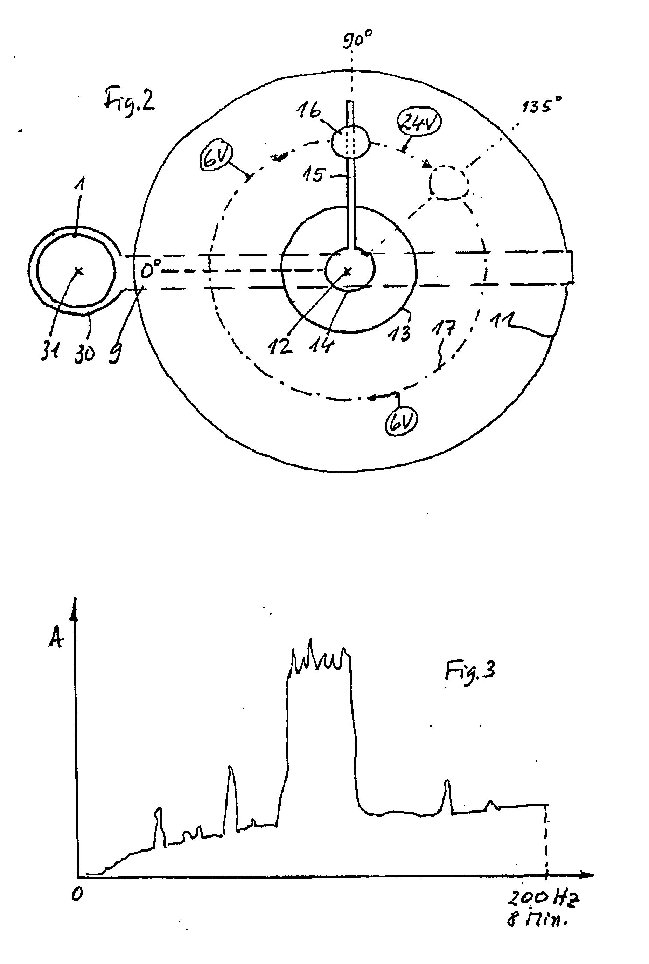

Nach Fig. 1 und 2 wird für die erfindungsgemäße Prüfung am Mast 1 mit Hilfe eines Trägers 9 ein insgesamt mit 10 bezeichneter Schwingungsgenerator (z.B. mit Hilfe eines Spannbandes mit Ratsche) befestigt. Der Schwingungsgenerator 10 besitzt ein schützendes Gehäuse 11 und in seiner Mitte eine am Träger 9 befestigte Drehachse 12. Der Drehachse 12 wird ein Motor 13 zugeordnet, der auf eine Hülse 14 wirkt, an welcher eine radiale Speiche 15 befestigt ist. Auf der Speiche 15 wird als Unwucht ein Gewicht 16 fixiert. Es kann vorgesehen werden, das Gewicht 16 auf der Speiche 15 verschiebbar (und in der neuen Position fixierbar) zu machen. Wenn der Motor 13 in Betrieb gesetzt wird, treibt er das Gewicht 16 über die Hülse 14 und die Speiche 15 auf einem Rotationsweg 17 im Kreis an (Fig. 2). Erfindungsgemäß soll der Motor 13 so ausgebildet werden, daß er mit zeitlich geänderter, z.B. steigender, Umdrehungszahl rotiert. Beispielsweise können Umdrehungszahlen von 0 bis 200 Hz günstig bzw. ausreichend für das erstrebte Ergebnis sein. Meßbare Ergebnisse stellen sich im Allgemeinen ab einer Frequenz von etwa 10 Hz ein

Durch die Rotation des Gewichts 16 um die Drehachse 12 wird über die Speiche 15, die Achse 12 und den Träger 9 eine periodische Unwucht auf den Mast 1 ausgeübt. Die Folge ist eine erschwungene Schwingung des Mastes 1 und der mit ihm verbundenen Teile. Wegen der geringen Masse, z.B. größenordnungsmäßig 3 bis 8 kg, des Gewichts 16, ist die Wirkung der erzwungenen Schwingung bei niedrigen Frequenzen für den Beschauer kaum sichtbar. Wenn jedoch die Frequenz steigt, wird ein Mitschwingen des Mastes und seiner Teile sichtbar. Wenn Eigenschwingungen durchlaufen werden, kann der Beschauer eine deutliche Mastbewegung und seiner Teile bzw. ein Zittern, Klappern usw. des jeweiligen Mastteils (als Folge einer Resonanz) erkennen.

Zum Messen der in das Mastsystem eingeleiteten erzwungenen Schwingungen und der dadurch hervorgerufenen Wirkungen wird in Fig. 1 ein insgesamt mit 18 bezeichneter Sensor vorgesehen, der über eine oder mehrere Meßstellen 19, 20, 21, 22 eine, vorzugsweise räumliche, Aufzeichnung der durch die Unwuchtkräfte angeregten Eigenschwingungen des Mastes und dessen Teilen liefert. Beispielsweise geben die Prüfungen an den Meßstellen 19 und 20 am Mastfuß 23 bzw. in beispielsweise Mannshöhe oberhalb des Bodens 3 Auskunft über fast alle durch die erzwungene Schwingung angeregten Eigenschwingungen des Mastes 1 und seiner Teile. Unter Umständen kann es sinnvoll sein, gezielt spezielle Bereiche eines Mastsystems zu untersuchen, zu diesem Zweck kann beispielsweise an der Verbindungsstelle 6 und am Ausleger 5 eine Meßstelle 21 und 22 vorgesehen werden. Hierbei kann speziell die Verbindungsstelle 6, die oft eine Schwachstelle im System ist, untersucht werden. Auch irgendwo im Mast 1 oder dessen Ausleger 5 vorhandene Roststellen 24 lassen sich auf diese Weise lokalisieren.

Das Bild einer mit dem Sensor 18 aufgezeichneten Registrierung wird in Fig. 3 als Diagramm dargestellt. Die Abszisse des Diagramms zeigt die Meßzeit bzw. die während der Zeit ansteigende Umdrehungszahl des Gewichts 16. Die Ordinate zeigt die Amplitude der mit dem Sensor 18 gemessenen Schwingung. Das so erzeugte Schwingungsbild 25 enthält als Beispiel ein kleines Maximum 26, das davon herrühren kann, daß das Schild 8 locker ist und daher unkontrolliert bei der angegebenen Frequenz schwingt (wie man beispielsweise durch Augenschein erkennen kann). In Fig. 3 besitzt das Schwingungsbild 25 weitere Spitzen, z.B. eine Spitze 27, die der Eigenschwingung des Auslegers 5 entspricht, und ein Hauptmaximum 28, das der Eigenschwingung des Gesamtmastes 1 entspricht.

Fig. 2 zeigt einen horizontalen Schnitt durch den Mast 1 mit daran, z.B. über ein Spannband 30 befestigtem Träger 9, auf dem (senkrecht zur Zeichnungsebene) die Drehachse 12 fixiert ist. Auf letzterer wird eine Hülse 14 drehbar gelagert und an der Hülse eine Speiche 15 befestigt. Auf der Speiche 15 wird das Gewicht 16 befestigt. Die Bewegung des Gewichts 16 auf dem Rotationsweg 17 kann im Rahmen der Erfindung gleichförmig mit jeweils nach einem bestimmten Zeitraum stufenweise ansteigender Umdrehungszahl bzw. Frequenz oder kontinuierlich durch entsprechende Regelung der Motordrehzahl angehoben oder abgesenkt werden.

Zum Verdeutlichen bestimmter Eigenschaften oder Schwächen eines Mastsystems kann es im Rahmen der Erfindung besonders vorteilhaft sein, das die Unwucht bildende bzw. hervorrufende Gewicht 16 in einem bestimmten Phasenbereich seiner Umdrehung mit erhöhter Geschwindigkeit anzutreiben. Wenn beispielsweise die Verbindungslinie zwischen Drehachse 12 und Mastachse 31 die Phase 0 bezeichnet und die Umdrehungsrichtung 32 durch den Pfeil in Fig. 2 gekennzeichnet wird, befindet sich das gezeichnete Gewicht 16 momentan in der Phase 90°. Wird nun der Motor 13 auf seinem Weg von Phase 0 bis 90° mit 6 V und dann ab Phase 90°, bis beispielsweise Phase 135°, mit 24 V betrieben, ergibt sich im Bereich dieses Phasenwinkels 90° bis 135°jeweils eine Art Stoß, der über den Träger 9 in den Mast 1 eingeleitet wird. Ein solcher Stoß wird in dem vom Sensor 18 aufgenommenen Schwingungsbild ebenfalls aufgezeichnet. Er umfaßt nur einen kleinen Teil der Gesamtdauer einer Schwingung, das heißt einer Umdrehung der Hülse 14. in Fig. 2 wird nämlich angenommen, daß die am Motor 13 anliegende Spannung von der Phase 135° über die Phase 360° hinweg wieder auf 6 V geschaltet wird. Diese mechanisch in einer bestimmten Richtung auf den Mast ausgeübten Stöße (nicht gezeichnet) werden dem Schwingungsbild 25 überlagert. Wenn sich in diesen Stö-ßen Unregelmäßigkeiten, beispielsweise verschiedene maximale Höhen, der für verschiedene Grundfrequenzen aufgenommenen Stöße zeigen, beweist das, daß das Mastsystem in irgendeiner Weise nicht in Ordnung ist. Es bedarf dann einer genaueren Überprüfung.

### Bezugszeichenliste:

- 1 =: Mast
- 2 =: unterirdischer Teil (1)
- 3 =: Boden
- 4 =: oberes Ende (1)
- 5 =: Ausleger
- 6 =: Verbindungsstelle
- 7 =: Ampel
- 8 =: Schild
- 9 =: Träger
- 10 =: Generator
- 11 =: Gehäuse
- 12 =: Drehachse
- 13 =: Motor
- 14 =: Hülse
- 15 =: Speiche
- 16 =: Gewicht
- 17 =: Rotationsweg
- 18 =: Sensor
- 19-22 =: Meßstelle
- 23 =: Mastfuß
- 24 =: Roststelle
- 25 =: Schwingungsbild
- 26 =: kleines Maximum.
- 27 =: Spitze
- 28 =: Hauptmaximum
- 30 =: Spannband
- 31 =: Achse
- 32 =: Umdrehungsrichtung

## Patentansprüche

1. Verfahren zum Prüfen der Stabilität eines im Boden freistehend verankerten Mastes (1), wobei der Mast (1) zu mechanischen Schwingungen erregt wird, wobei mit Hilfe eines als Unwucht an dem Mast (1) drehbar gelagerten Gewichts (16) mit motorschem Antrieb (13) Schwingungen in den Mast (1) eingeleitet werden, wobei eine Amplitude der so erzeugten Schwingung registriert wird, **dadurch gekennzeichnet, dass** das Gewicht (16) um eine senkrechte Achse (12) gedreht wird, dass der Antrieb (13) mit kontinuierlich oder stufenweise veränderter Drehzahl betrieben wird und dass die dabei sich einstellenden Resonanzen für den Mast (1) insgesamt, für alle Mastteile sowie daran befestigte Gegenstände getrennt voneinander und nacheinander erfasst werden.

2. Verfahren nach Anspruch 1, **dadurch gekennzeichnet, dass** die Drehzahl in einem vorgegebenen Frequenzbereich, z.B. 0 bis 200 Hz, automatisch verändert wird.

3. Verfahren nach Anspruch 1 oder 2, **dadurch gekennzeichnet, dass** die Umdrehungsgeschwindigkeit des Gewichts (16) bei jeder Umdrehung in einem bestimmten Phasenbereich stoßartig erhöht und am Ende des Phasenbereichs stoßartig wieder vermindert wird.

4. Vorrichtung zum Prüfen der Stabilität eines Mastes (1), mit einem als Unwucht an dem Mast (1) gelagerten Gewicht (16), mit dem mittels eines motorischen Antriebs (13) Schwingungen des Masts (1) erregbar sind, und mit Mitteln zur Registrierung der Schwingungen, **dadurch gekennzeichnet, dass** das Gewicht (16) um eine senkrechte Achse (12) drehbar gelagert ist und dass Mittel zum kontinuierlichen oder stufenweisen Verändern der Drehzahl des Antriebs (13) angeordnet sind.

5. Vorrichtung nach Anspruch 4, **dadurch gekennzeichnet dass** das Gewicht (16) auf einem an dem Mast (1) befestigten Träger (9) außerhalb seines Schwerpunktes gelagert ist und dass ein radialer Abstand zwischen der Achse (12) und dem Schwerpunkt des Gewichts (16) verstellbar ist.

6. Vorrichtung nach Anspruch 5, **dadurch gekennzeichnet, dass** das Gewicht (16) auf einer rotierbar auf der Achse (12) befestigten Speiche lösbar fixiert ist.

7. Vorrichtung nach einem der Ansprüche 4 bis 6, **dadurch gekennzeichnet dass** das Gewicht (16) als vorzugsweise elektrisch und/oder mechanisch einstellbare Unwucht ausgebildet ist.

## Claims

1. Method for testing the stability of a pole (1) anchored in a free-standing manner in the ground, wherein the pole (1) is excited to perform mechanical vibrations, wherein by means of a weight (16) mounted rotatably as a unbalanced mass on the pole (1) with a motor drive (13) vibrations are introduced into the pole (1), wherein the amplitude of the thus generated vibration is recorded, **characterised in that** the weight (16) is rotated about a perpendicular axis (12), **in that** the drive (13) is operated at a continually or gradually modified speed, and **in that** the thus adjusted resonances for the pole (1) overall, for all pole parts as well as objects secured onto the latter are determined separately from one another and consecutively.

2. Method according to claim 1, **characterised in that** the speed is changed automatically in a predefined frequency range, e.g. 0 to 200 Hz.

3. Method according to claim 1 or 2, **characterised in that** the rotational speed of the weight (16) with each rotation increases suddenly in a specific phase range and at the end of the phase range is decreased again suddenly.

4. Device for testing the stability of a pole (1), with a weight (16) mounted as an unbalanced mass onto the pole (1), by which by means of a motor drive (13) vibrations of the pole (1) can be excited, and with means for recording the vibrations, **characterised in that** the weight (16) is mounted rotatably about a perpendicular axis (12) and **in that** means are arranged for the continual or gradual adjustment of the speed of the drive (13).

5. Device according to claim 4, **characterised in that** the weight (16) is mounted beyond its centre of mass on a support (9) secured onto the pole (1), and **in that** the radial distance between the axis (12) and the centre of mass of the weight (16) can be adjusted.

6. Device according to claim 5, **characterised in that** the weight (16) is fixed detachably onto a spoke secured rotatably on the axis (12).

7. Device according to any one of claims 4 to 8, **characterised in that** the weight (16) is designed as a preferably electrically and/or mechanically adjustable unbalanced mass.

## Revendications

1. Procédé d'essai de la stabilité d'un poteau (1) ancré de façon isolée dans le sol, dans lequel le poteau (1) est excité par des oscillations mécaniques, dans lequel des oscillations sont induites dans le poteau (1) au moyen d'un poids (16) pourvu d'un entraînement motorisé (13) et logé à rotation sur le poteau (1) de manière à provoquer un balourd, et dans lequel l'amplitude de l'oscillation ainsi générée est enregistrée, **caractérisé en ce que** le poids (16) est mis en rotation autour d'un axe vertical (12), **en ce que** l'entraînement (13) est actionné à une vitesse de rotation modifiée en continu ou par paliers, et **en ce que** les résonances qui s'établissent alors sont détectées séparément et successivement pour l'ensemble du poteau (1), pour toutes les pièces du poteau, ainsi que pour les objets qui y sont attachés.

2. Procédé selon la revendication 1, **caractérisé en ce que** la vitesse de rotation est automatiquement modifiée dans une plage prédéfinie de fréquences, par exemple 0 à 200 Hz.

3. Procédé selon la revendication 1 ou 2, **caractérisé en ce que** la vitesse de rotation du poids (16) est augmentée par impulsion à chaque tour dans une plage déterminée de phases et qu'elle est de nouveau réduite par impulsions a la fin de la plage de phases.

4. Dispositif d'essai de la stabilité d'un poteau (1), qui inclut un poids (16), logé sur le poteau (1) de manière à provoquer un balourd et susceptible d'exciter des oscillations du poteau (1) au moyen d'un entraînement motorisé (13) et inclut aussi des moyens d'enregistrement des oscillations, **caractérisé en ce que** le poids (16) est logé à rotation autour d'un axe vertical (12) et **en ce qu'**il comprend des moyens modifiant en continu ou par paliers la vitesse de rotation de l'entraînement (13).

5. Dispositif selon la revendication 4, **caractérisé en ce que** le poids (16) est logé, en dehors de son centre de gravité, sur un support (9) attaché au poteau (1) et **en ce que** la distance radiale entre l'axe (12) et le centre de gravité du poids (16) est réglable.

6. Dispositif selon la revendication 5, **caractérisé en ce que** le poids (16) est fixé de façon démontable sur un bras attaché à rotation sur l'axe (12).

7. Dispositif selon l'une quelconque des revendications 4 à 6, **caractérisé en ce que** le poids (16) constitue un balourd de référence réglable électriquement ou mécaniquement.
